# EUROPÄISCHE PATENTSCHRIFT

(11) **EP 1 574 064 B1**
(45) Veröffentlichungstag und Bekanntmachung des Hinweises auf die Patenterteilung: **24.01.2007**
(21) Anmeldenummer: 03789128.0
(22) Anmeldetag: 04.12.2003
(51) Int. Cl.: H04N 7/18, H04N 5/33, B60R 1/00

(54) **DARSTELLUNGSBEREICH EINES AUTOMOBILEN NACHTSICHTSYSTEMS**
AREA OF REPRESENTATION IN AN AUTOMOTIVE NIGHT VISION SYSTEM
ZONE DE REPRESENTATION D'UN SYSTEME DE VISION NOCTURNE POUR AUTOMOBILES

(30) Priorität: 20.12.2002 DE 10259882
(43) Veröffentlichungstag der Anmeldung: 14.09.2005
(73) Patentinhaber: DaimlerChrysler AG, 70567 Stuttgart (DE)
(72) Erfinder: EGGERS, Helmuth, 89077 Ulm (DE); KURZ, Gerhard, 73240 Wendlingen (DE); SEEKIRCHER, Jürgen, 73760 Ostfildern (DE); WOHLGEMUTH, Thomas, 72631 Aichtal (DE)
(86) Internationale Anmeldenummer: PCT/EP2003/013688
(87) Internationale Veröffentlichungsnummer: WO 2004/059978

(56) Entgegenhaltungen:
- DE-A- 4 032 927
- DE-A- 10 104 734
- DE-A- 10 126 492
- US-A- 5 414 439
- US-A- 6 150 930

## Beschreibung

Die Erfindung betrifft ein Verfahren zur Umgebungserfassung mittels eines automobilen Nachtsichtsystems mehrere Bereiche umfassend.

Es gibt bereits erste kommerziell erhältliche Fahrer-Assistenzsysteme die dem Fahrer bei schlechtem Wetter oder bei Dunkelheit die Sicht verbessern. Dabei handelt es sich um Nachtsichtsysteme bei denen mittels eines Infrarotsensors die vorausliegende Fahrzeugumgebung erfasst wird. Die erfassten Umgebungsdaten werden mit einer Datenverarbeitungseinheit zu einem Bild verarbeitet und dem Fahrer im Fahrzeug auf einer optischen Anzeige dargestellt. Wobei der Fahrer zur Informationsaufnahme auf die optische Anzeige blickt und ggf. gefährliche Verkehrssituationen erkennen kann.

In **IEEE Computer Graphics and Applications, September/Oktober, 1999, Seite 6 :"Night Vision: Infrared Takes to the Road"** wird ein automobiles Nachtsichtsystem vorgestellt, welches eine Infrarotkamera und ein Head-Up-Display umfasst. Wobei mit dem Head-Up-Display die mittels der Infrarotkamera detektierten, dem Fahrzeug vorausliegenden, Umgebungsdaten virtuell auf die Windschutzscheibe projiziert werden. Wobei das System dem Fahrer eine drei- bis fünffach höhere Sichtweite gegenüber der bei Abblendlicht typischen Sichtweite ermöglicht. Wodurch sich bei einer Fahrtgeschwindigkeit von 60 Meilen pro Stunde die maximale Reaktionszeit bei Abblendlicht von 3.5 Sekunden auf eine Reaktionszeit von 17.5 Sekunden bei Nachtsicht erhöht.

In der gattungsbildenden Offenlegungsschrift DE4032927A1 wird eine Vorrichtung zur Verbesserung der Sichtverhältnisse bei Kraftfahrzeugen vorgeschlagen, bei der eine Infrarotkamera den vom Fahrer beobachteten Sichtbereich erfasst, welche mit einem Infrarotstrahler bestrahlt wird. Das von der Infrarotkamera abgegebene Signal wird einer Anzeigevorrichtung zugeführt, welches das Bild der Infrarotkamera als virtuelles Bild dem Bild der Fahrzeugumgebung visuell überlagert. Dabei ist der mit der Kamera erfassbare Bereich (Erfassungsbereich) gleich dem mittels der Anzeigevorrichtung darzustellenden Bereich (Darstellungsbereich). Der Erfassungsbereich wird hierbei insbesondere durch die Leuchtcharakteristik der Fernlichtscheinwerfer bestimmt.

Auf der Internetseite der Toyota Motor Corporation (www.toyota.co.jp/Showroom/All toyota lineup/LandCruiserCygnus /safety/index.html) wird ein System zur Unterstützung des Sehvermögens des Fahrers bei Nachtfahrten vorgestellt. Dabei wird mittels einer im Nahinfraroten empfindlichen Kamera die Umgebung erfasst und dem Fahrer auf einem Head-Up-Dispaly angezeigt. Das System zeigt bei Abblendlicht den dem Lichtkegel des Fahrzeugs vorausliegenden, schwer erkennbaren Straßenverlauf sowie sich in der Umgebung befindliche Personen, Fahrzeuge und Hindernisse an. Dem Lichtkegel des Abblendlichts schließt sich dazu ein mit dem Nachtsichtsystem erkennbarer Bereich an. Der auswertbare Bereich liegt idealerweise bei etwa 100m und reicht maximal bis ca. 150m. Das System dient insbesondere als Assistent für die Fernsicht, in Situationen bei denen man nicht mit Fernlicht fahren kann.

Das System stellt dem Fahrer bei Fernlichtfahrt vorausliegende Informationen dadurch bereit, dass in direkter Sicht schwer erkennbare Gegenstände abgebildet werden. Durch die Verwendung von Nahinfrarotstrahlen kann das System den Straßenzustand, auf die Straße gefallene Gegenstände und andere Straßeninformationen anzeigen. Dem Lichtkegel des Fernlichts, welches mit einer Reichweite von in etwa 180m angegeben wird, schließt sich dazu der mit dem Nachtsichtsystem erfassbare Bereich an. Der erfassbare Bereich liegt bei ungefähr 200m und wird maximal mit ca. 250m angegeben. Alle bisher kommerziell verfügbaren Nachtsichtsysteme sind derart ausgelegt, dass sie Objekte in möglichst großer Entfernung anzeigen können. Sie bergen jedoch die große Gefahr, dass der Fahrer in Situationen schlechter Sicht oder bei Dunkelheit dazu verleitet wird, schneller zu Fahren als dies ohne Nachtsichtsystem möglich ist.

Der Erfindung liegt deshalb die Aufgabe zu Grunde, ein Verfahren zur Umgebungserfassung mittels eines automobilen Nachtsichtsystems zu schaffen, womit dem Fahrer vorausliegende Umgebungsinformation angezeigt wird, ohne dabei zu einem Blindflug zu verleiten.

Die Aufgabe wird gemäß der Erfindung durch ein Verfahren mit den Merkmalen des Patentanspruch 1 gelöst. Vorteilhafte Ausgestaltungen und Weiterbildungen der Erfindung werden in den Unteransprüchen aufgezeigt.

Gemäß der Erfindung wird ein Verfahren zur Umgebungserfassung mittels eines automobilen Nachtsichtsystems bereitgestellt. Zur Erfassung von Umgebungsdaten umfasst das System mehrere Bereiche. Dazu gehören ein Erfassungsbereich, worin das Nachtsichtsystem für optische Strahlung nichtsichtbarerer IR-Wellenlänge empfindlich ist und Umgebungsdaten erfasst werden. Weiterhin umfasst das System einen Darstellungsbereich, wobei die darin mit dem Nachtsichtsystems erfassten Umgebungsdaten dem Fahrer auf einer optischen Anzeige dargestellt werden. In einer erfinderischen Weise umfasst der Darstellungsbereich des Nachtsichtsystems dabei maximal den Lichtkegel des Fernlichtbereichs des Fahrzeugs. Aufgrund der Einschränkung des Darstellungsbereichs werden dem Fahrer nur diejenigen Umgebungsdaten angezeigt, die er bei Aktivierung des konventionellen Fernlichts ohnehin sehen würde.

In besonders vorteilhafter Weise umfasst das System einen Auswertebereich, innerhalb dem die mittels dem Nachtsichtsystem erfassten Umgebungsdaten einer Auswertung, insbesondere einer Objekterkennung, unterzogen werden.

In einer weiteren vorteilhaften Weise schließt sich dem Darstellungsbereich des Nachtsichtsystems ein Toleranzbereich an. Wobei diejenigen Umgebungsdaten die der Toleranzbereich umfasst, dem Fahrer ebenfalls mittels der optischen Anzeige dargestellt werden. In einer Ausführungsform der Erfindung ist vorgesehen, dass der Toleranzbereich fest vorgegeben wird. Wobei ein Toleranzbereich einerseits deshalb vorteilhaft ist, da zwischen dem Fernlichtbereich und dem Erfassungsbereich keine scharfe Trennlinie existiert. Andererseits kann aufgrund der Winkelbereiche der Kamera, wobei jedes Pixel einer Raumrichtung entspricht, die Grenze des Fernlichtbereichs nicht mit ausreichender Genauigkeit festgelegt werden. Es ist aber auch denkbar den Toleranzbereich aufgrund weiterer Fahrzeug- oder Umgebungsgrößen, beispielsweise der Fahrtgeschwindigkeit, automatisch zu steuern. In einer besonders bevorzugten Ausführungsform der Erfindung wird der Toleranzbereich jedoch in Abhängigkeit der Auswertung der Umgebungsdaten eingestellt. Beispielsweise wird der Toleranzbereich dann automatisch erweitert, wenn ein Objekt nur Teilweise im aktuellen Darstellungsbereich liegt. Der Toleranzbereich wird hierbei derart erweitert, dass ein Objekt vollständig vom Darstellungsbereich und Toleranzbereich umfasst wird.

In Fahrtrichtung des Fahrzeugs umfasst der Darstellungsbereich wenigstens einen Teil des Abblendlichtbereichs. Wobei bevorzugt Objekte im Bereich direkt vor dem Fahrzeug nicht dargestellt werden, da der Fahrer diese Objekte auch ohne Nachtsichtsystem einsehen kann. Eine seitliche Begrenzung des Darstellungsbereichs erfolgt dabei nicht notwendigerweise. Wobei der Öffnungswinkel des Nachtsichtsystems bevorzugt derart gewählt ist, dass dieser die Keule des Fernlichtbereichs seitlich nicht durchdringt.

Der Auswertebereich des Nachtsichtsystems ist in vorteilhafter Weise derart ausgelegt, so dass dieser wenigstens den Fernlichtbereich des Fahrzeugs umfasst. Zur Auswertung werden die im Auswertebereich erfassten Umgebungsdaten sodann mittels einer Datenverarbeitungseinheit in Verbindung mit Methoden der Bildverarbeitung und Klassifikation einer Objekterkennung unterzogen. Falls sich die erkannten Objekte nur teilweise im Auswertebereich befinden, wird in einer vorteilhaften Weise der Auswertebereich automatisch erweitert. Dazu kann beispielsweise festgestellt werden ob eine geschlossene Objektkontur vorliegt. Der Auswertebereich wird dabei solange erweitert bis ein Objekt vollständig ausgewertet wurde. In einer besonders vorteilhaften Weise ist der Auswertebereich jedoch so ausgelegt, dass dieser den gesamten Erfassungsbereich des Nachtsichtsystems umfasst, womit auch in großer Entfernung befindliche Objekte detektiert werden können. In einer gewinnbringenden Weise ist es auch denkbar dass diejenigen Objekte die sich direkt vor dem Fahrzeug befinden nicht erkannt werden, um bei der Auswertung Rechenzeit zu sparen.

In einer gewinnbringenden Ausführungsform der Erfindung werden die mittels der Auswertung im Darstellungsbereich detektierten Objekte bei der Darstellung hervorgehoben. Dazu bietet es sich bevorzugt an, die Objekte einzufärben. Wobei es vorteilhaft ist, die detektierten Objekte zuvor einer Klassifikation zu unterziehen und diese anschließend anhand ihrer Klassenzugehörigkeit (z.B. Fußgänger, Fahrzeuge, ...) unterschiedlich einzufärben. Auch wäre es denkbar lediglich die Objektkontur darzustellen und diese entsprechend einzufärben.

In einer weiteren gewinnbringenden Ausführungsform der Erfindung wird die Information über die bei der Auswertung im Auswertebereich detektierten Objekte zur weiteren Auswertung Fahrzeug-internen Systemen zur Verfügung gestellt. Die Information kann dabei beispielsweise dazu dienen, um Sicherheitsrelevante Systeme frühzeitig zu aktivieren oder für eine Aktivierung vorzubereiten.

Weitere Merkmale und Vorteile der Erfindung ergeben sich aus den folgenden Beschreibungen von Ausführungsbeispielen anhand der Figuren.

Dabei zeigen:
- Fig. 1: Darstellungsbereich des Nachtsichtsystems, welcher den Abblendlicht- und Fernlichtbereich vollständig umfasst.
- Fig. 2: Darstellungsbereich des Nachtsichtsystems, welcher den Fernlichtbereich und einen seitliche Toleranzbereiche umfasst.
- Fig. 3: Darstellungsbereich des Nachtsichtsystems, welcher den Abblendlicht- und Fernlichtbereich teilweise umfasst.
- Fig. 4: Darstellungsbereich des Nachtsichtsystems, welcher den Fernlichtbereich und einen in Fahrtrichtung zusätzlichen Toleranzbereich umfasst.

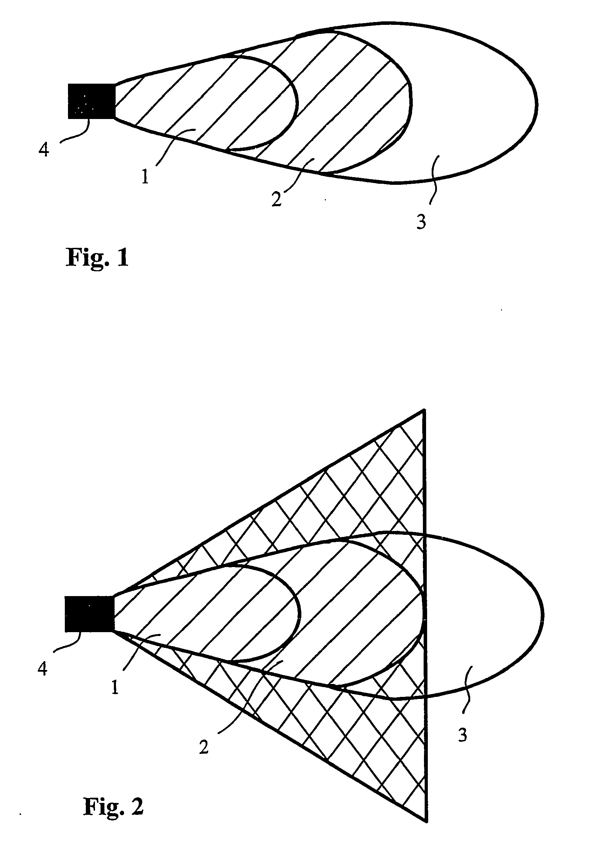

In **Fig.1** wird beispielhaft der Darstellungsbereich des erfindungsgemäßen Automobilen Nachtsichtsystems **(4)** dargestellt. Dabei umfasst der Darstellungsbereich (einfach schraffiert dargestellt) den Abblendlichtbereich **(1)** und den Fernlichtbereich **(2)** vollständig. Wobei sich der Darstellungsbereich in Fahrtrichtung bis zur Grenze zwischen dem Fernlichtbereich **(2)** und dem Erfassungsbereich **(3)** erstreckt.

**Fig.2** zeigt den Darstellungsbereich des Automobilen Nachtsichtsystems **(4),** wobei hierbei gegenüber dem in Fig.1 gezeigten Darstellungsbereich keine seitliche Begrenzung auf den Fernlichtbereich **(2)** erfolgt. Der Öffnungswinkel der Kamera ist derart gewählt, dass sich seitlich an den Fernlichtbereich **(2)** Toleranzbereiche (doppelt schraffiert dargestellt) anschließen.

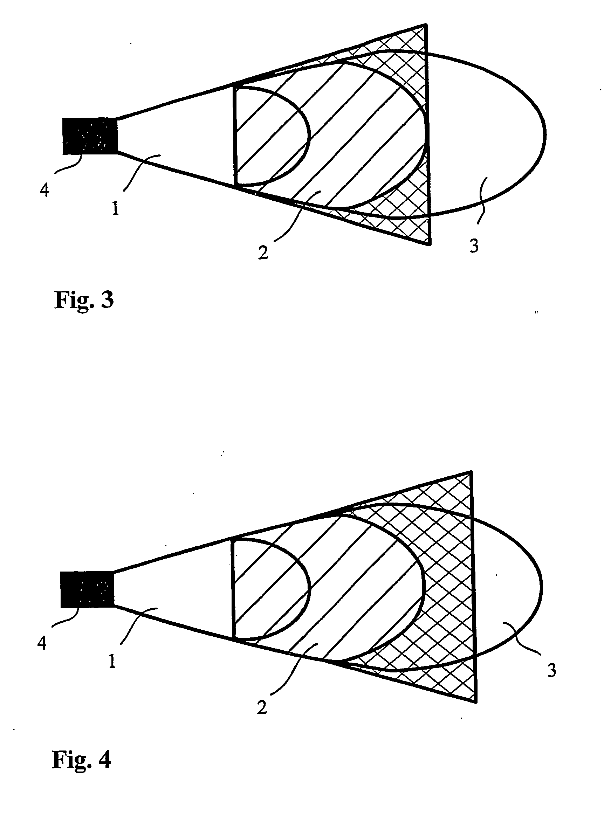

In **Fig.3** ist das Nachtsichtsystem **(4)** derart ausgelegt, dass sich der Darstellungsbereich gegenüber dem in Fig.1 aufgezeigten Darstellungsbereich dadurch unterscheidet, dass dieser bevorzugt nur einen Teil des Abblendlichtbereichs **(1)** umfasst. Zudem wird hier der Toleranzbereich seitlich begrenzt, wobei der Öffnungswinkel des Nachtsichtsystems **(4)** derart gewählt ist, dass dieser die Keule des Fernlichtbereichs nicht durchdringt.

**Fig.4** zeigt beispielhaft eine weitere Variante des Darstellungsbereichs, wobei dieser gegenüber dem in Fig.3 angegebenen Darstellungsbereich einen größeren Toleranzbereich aufweist. Der Darstellungsbereich endet hierbei nicht an der Grenze zwischen dem Fernlichtbereich **(2)** und dem Erfassungsbereich **(3)** sondern erstreckt sich in Fahrtrichtung weiter in den Erfassungsbereich **(3)** hinein.

## Patentansprüche

1. Verfahren zur Umgebungserfassung mittels eines automobilen Nachtsichtsystems (4) mehrere Bereiche umfassend,
einen Erfassungsbereich (3) worin das Nachtsichtsystem (4) wenigstens für optische Strahlung im IR-Wellenlängenbereich empfindlich ist und über den Lichtkegel des Fernlichts (3) hinaus gehende Umgebungsdaten erfasst,
und einen Darstellungsbereich, wobei information von den darin erfassten Umgebungsdaten mittels einer Anzeigeeinrichtung optisch dargestellt wird,
**dadurch gekennzeichnet,**
**dass** der Darstellungsbereich maximal den Lichtkegel des Fernlichtbereichs (3) des Fahrzeugs umfasst, so dass dem Fahrer nur diejenigen Umgebungsdaten angezeigt werden, die er bei Aktivierung des konventionellen Fernlichts ohnehin sehen würde.

2. Verfahren nach Anspruch 1, **dadurch gekennzeichnet, dass** ein Auswertebereich vorgesehen ist, innerhalb dessen die mittels dem Nachtsichtsystem erfassten Umgebungsdaten einer Auswertung, insbesondere einer Objekterkennung, unterzogen werden.

3. Verfahren nach einem der vorhergehenden Ansprüche, **dadurch gekennzeichnet, dass** sich dem Darstellungsbereich ein fest vorgegebener oder aufgrund weiterer Fahrzeug- oder Umgebungsgrössen automatisch gesteuerter Toleranzbereich anschliesst, wobei diejenigen Umgebungsdaten, die der Toleranzbereich umfasst, dem Fahrer ebenfalls mittels der optischen Anzeige dargestellt werden.

4. Verfahren nach einem der vorhergehenden Ansprüche, **dadurch gekennzeichnet, dass** der Darstellungsbereich wenigstens einen Teil des Abblendlichtbereichs umfasst.

5. Verfahren nach einem der vorhergehenden Ansprüche 2 - 4, **dadurch gekennzeichnet, dass** der Auswertebereich wenigstens den Fernlichtbereich umfasst.

6. Verfahren nach einem der vorhergehenden Ansprüche 2 - 5, **dadurch gekennzeichnet, dass** die mittels der Auswertung im Auswertebereich diejenigen detektierten Objekte bei der optischen Darstellung hervorgehoben werden, welche mit dem Darstellungsbereich überlappen.

7. Verfahren nach einem der vorhergehenden Ansprüche 2 - 6, **dadurch gekennzeichnet, dass** die Information über die bei der Auswertung im Auswertebereich detektierten Objekte zur weiteren Auswertung Fahrzeug-internen Systemen zur Verfügung gestellt werden.

## Claims

1. Method for detecting surroundings by means of an automotive night vision system (4) comprising a number of areas, a detection area (3) wherein the night vision system (4) is sensitive at least to optical radiation in the IR wavelength region and detects data relating to the surroundings and exceeding the light cone of the high beam (3), and an area of representation, information from the data relating to the surroundings detected therein being represented optically by means of a display device, **characterized in that** the area of representation comprises at most the light cone of the vehicle high beam area (3) so that the driver is shown only those data relating to the surroundings, which he would in any case see on activation of the conventional high beam.

2. Method according to Claim 1, **characterized in that** an evaluation area is provided within which the data relating to the surroundings detected by means of the night vision system are subjected to evaluation, in particular object recognition.

3. Method according to one of the preceding claims, **characterized in that** a tolerance area, which is permanently prescribed or is controlled automatically on the basis of further vehicle variables or variables of the surroundings, adjoins the area of representation, those data relating to the surroundings which cover the tolerance area likewise being represented for the driver by means of the optical display.

4. Method according to one of the preceding claims, **characterized in that** the area of representation comprises at least a part of the low beam area.

5. Method according to one of the preceding Claims 2-4, **characterized in that** the evaluation area comprises at least the main beam area.

6. Method according to one of the preceding Claims 2-5, **characterized in that** those detected objects that overlap with the area of representation are emphasized in the optical representation by means of the evaluation in the evaluation area.

7. Method according to one of the preceding Claims 2-6, **characterized in that** the information relating to the objects detected during the evaluation in the evaluation area is made available to internal vehicle systems for further evaluation.

## Revendications

1. Procédé pour l'enregistrement de l'environnement au moyen d'un système de vision nocturne (4) pour automobile comprenant plusieurs domaines, un domaine d'enregistrement (3) dans lequel le système de vision nocturne (4) est au moins sensible aux rayonnements optiques dans le domaine des longueurs d'ondes IR et dans lequel il enregistre des données d'environnement qui se déroulent au-delà du faisceau lumineux des feux de route (3) et un domaine de représentation dans lequel on représente optiquement des informations des données d'environnement qui y sont enregistrées au moyen d'un dispositif de visualisation, **caractérisé en ce que** le domaine de représentation englobe au maximum le faisceau lumineux des feux de route (3) du véhicule, de manière à ne représenter au conducteur que les données d'environnement qu'il verrait de toute façon en actionnant les feux de route conventionnels.

2. Procédé selon la revendication 1, **caractérisé en ce qu'**on prévoit un domaine de traitement à l'intérieur duquel les données d'environnement enregistrées au moyen du système de vision nocturne sont soumises à un traitement notamment une reconnaissance d'objets.

3. Procédé selon une des revendications précédentes, **caractérisé en ce qu'**on associe au domaine de représentation un domaine de tolérance défini de manière fixe ou commandé automatiquement en fonction d'autres grandeurs du véhicule ou de l'environnement, les données d'environnement comprises dans le domaine de tolérance étant également présentées au conducteur au moyen de la visualisation optique.

4. Procédé selon une des revendications précédentes, **caractérisé en ce que** le domaine de représentation englobe au moins une partie du domaine des feux de croisement.

5. Procédé selon une des revendications précédentes 2 - 4, **caractérisé en ce que** le domaine de traitement englobe au moins le domaine des feux de route.

6. Procédé selon une des revendications précédentes 2 - 5, **caractérisé en ce qu'**on accentue au moyen de la représentation optique, les objets détectés par le traitement dans le domaine de traitement et qui recouvrent le domaine de représentation.

7. Procédé selon une des revendications précédentes 2 - 6, **caractérisé en ce que** les informations sur les objets détectés par le traitement dans le domaine de traitement sont mises à disposition pour le traitement ultérieur de systèmes internes du véhicule.
